# EUROPEAN PATENT SPECIFICATION

(11) **EP 3 179 408 B1**
(45) Date of publication and mention of the grant of the patent: **08.05.2024**
(21) Application number: 16190953.6
(22) Date of filing: 27.09.2016
(51) Int. Cl.: G06V 20/30, G06F 16/583, G06F 16/58, G06V 40/16

(54) **PICTURE PROCESSING METHOD AND APPARATUS, COMPUTER PROGRAM AND RECORDING MEDIUM**
BILDVERARBEITUNGSVERFAHREN UND -VORRICHTUNG, COMPUTERPROGRAMM UND AUFZEICHNUNGSMEDIUM
PROCÉDÉ ET APPAREIL DE TRAITEMENT D'IMAGE, PROGRAMME INFORMATIQUE ET SUPPORT D'ENREGISTREMENT

(30) Priority: 20.11.2015 CN 201510813140
(43) Date of publication of application: 14.06.2017
(73) Proprietor: Xiaomi Inc., Beijing 100085 (CN)
(72) Inventor: CHEN, Zhijun, Haidian District, Beijing 100085 (CN); ZHANG, Tao, Haidian District, Beijing 100085 (CN); WANG, Pingze, Haidian District, Beijing 100085 (CN)
(74) Representative: Millburn, Julie Elizabeth

(56) References cited:
- CN-A- 104 317 932
- US-A1- 2012 294 495

## Description

### TECHNICAL FIELD

The present invention relates to the technical field of image processing, and more particularly, to a picture processing method and apparatus, a computer program and a recording medium.

### BACKGROUND ART

Currently, as image recognition techniques develop, there have been a growing number of researches on deep meaning expressed by images. However, existing automatic textual description systems for images only provide simple descriptions separately for persons or objects in images, and therefore a user is unable to obtain the interrelation among the persons in accordance to these descriptions.

US 2012/294495 A1 (WREN CHRISTOPHER R [US] ET AL) describes a system for accessing contact information using image recognition. It involves identifying users in images via an image recognition module that includes facial feature comparison. The system checks if permission rules are satisfied before providing contact information like phone numbers, email addresses, etc. It incorporates mobile devices and a backend server, using social network relationships and metadata such as location and context for identification. This technology is especially relevant for social network applications and enhances user interaction by simplifying contact information exchange.

### SUMMARY

The invention is set out in the appended set of claims.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a picture processing method according to an exemplary embodiment.
Fig. 2 is a flow chart illustrating a picture processing method according to another exemplary embodiment.
Fig. 3 is a flow chart illustrating a picture processing method according to another exemplary embodiment.
Fig. 4 is a flow chart illustrating a picture processing method according to another exemplary embodiment.
Fig. 5 is a flow chart illustrating a picture processing method according to another exemplary embodiment.
Fig. 6 is a block diagram illustrating a picture processing apparatus according to an exemplary embodiment.
Fig. 7 is a block diagram illustrating a determining module according to an exemplary embodiment.
Fig. 8 is a block diagram illustrating a determining module according to another exemplary embodiment.
Fig. 9 is a block diagram illustrating a first generating module according to an exemplary embodiment.
Fig. 10 is a block diagram illustrating a picture processing apparatus according to another exemplary embodiment.
Fig. 11 is a block diagram illustrating a picture processing apparatus according to another exemplary embodiment.
Fig. 12 is a block diagram illustrating an apparatus for processing a picture according to an exemplary embodiment.
Fig. 13 is a block diagram illustrating an apparatus for processing a picture according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

Embodiments of the present invention provide a technical solution that relates to a terminal or a server. According to the solution, a face in a picture is recognized, a personal identity corresponding to the recognized face is determined, and a description of the picture is generated according to the personal identity.

The terminal may be any device having an image processing function, such as a mobile phone, a computer, a digital broadcast terminal, a messaging device, a game console, a tablet device, a medical device, exercise equipment, a personal digital assistant, etc.

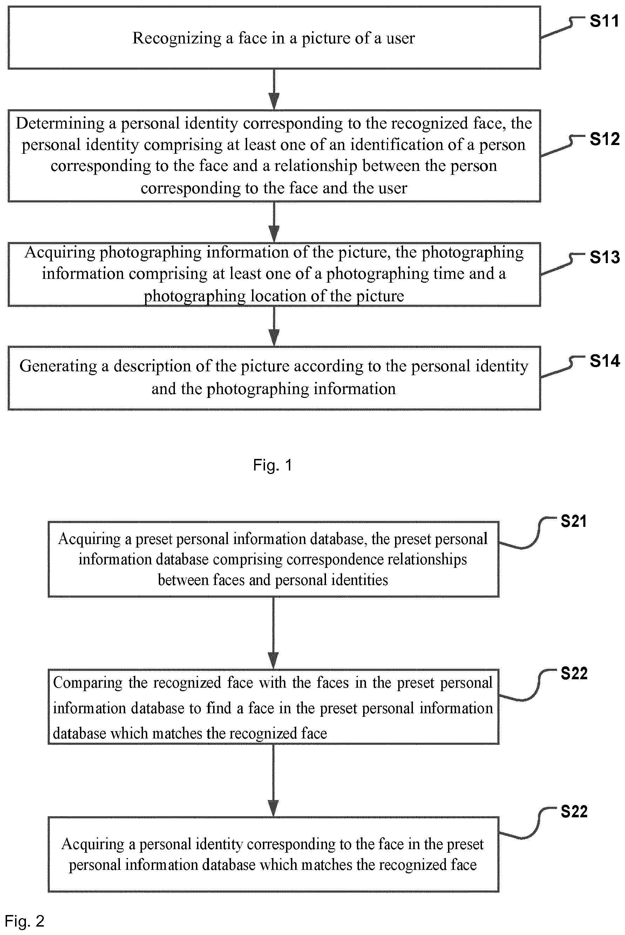

Fig. 1 is a flow chart illustrating a picture processing method according to an exemplary embodiment. As shown in Fig. 1, the picture processing method, which is used in a terminal or a server, comprises the following steps.

In step S11, a face in a picture of a user is recognized.

For example, geometrical feature-based methods, template-based methods and model-based methods may be employed. Among them, the template-based methods may be classified into correlation matching-based methods, Eigenfaces methods, linear discriminant analysis methods, singular value decomposition methods, neural network methods, dynamic link matching methods and the like. And the model-based methods include those based on Hidden Markov Model, Active Shape Model and Active Appearance Model, etc.

In step S12, a personal identity corresponding to the recognized face is determined. The personal identity comprises at least one of an identification of a person corresponding to the face and a relationship between the person corresponding to the face and the user.

The identification of the person may be an identification for identifying the identity of this person, such as a name, a network account, a nickname, a code name of the person, etc. The relationship between the person and the user may involve a family relationship, a kinship, a schoolmate relationship, a colleague relationship, a friend relationship, etc.

In step S13, photographing information of the picture is acquired. The photographing information comprises at least one of a photographing time and a photographing location of the picture.

The photographing information of the picture may be extracted from an exchangeable image file (abbreviated as exif) of the picture. The exif contains metadata that is dedicatedly specified for a photos of a digital camera and that comprises at least the following types of information on recording of the digital photo:
a photographing time, photographing equipment (e.g., main body of the equipment, lens, flashlight, etc.), photographing parameters (e.g., shutter speed, aperture F-number, ISO speed, focal length, metering mode, etc.), image processing parameters (e.g., sharpness, contrast, saturation, white balance, etc.), image description and copyright information, a photographing location (e.g., GPS positioning data, etc.), a thumbnail, etc.

In step S14, a description of the picture is generated according to the personal identity and the photographing information.

For instance, by recognizing face(s) in the picture, it can be determined that the faces in the picture are those of the user's parents, and the acquired photographing information of the picture comprises a photographing time of October 1, 2015 and a photographing location of Tiananmen. That is, by analyzing the picture, the following information is obtained: "parents", "October 1, 2015", "Tiananmen", etc. Then, a description of the picture (e.g., "with parents at Tiananmen on October 1, 2015", "have a trip in Beijing with parents on October 1, 2015", etc.) may be generated by using an abstract generation technology among natural language processing technologies (e.g., Extractive algorithm or Abstractive algorithm).

In this embodiment, the face(s) in the picture is(are) recognized and the description of the picture is generated according to the personal identity(identities) corresponding to the face(s) as well as the photographing information of the picture, so that the description of the picture is generated more accurately, the intelligence for automatic description of a picture is improved to be closer to human's ability to describe the picture, the user can quickly get an accurate knowledge of every picture, and user experience is improved.

In another embodiment, the personal identity corresponding to the recognized face may be determined according to one of the following implementations.

### I. Determine the personal identity corresponding to the face by virtue of a preset personal information database

Fig. 2 is a flow chart illustrating a picture processing method according to another exemplary embodiment. As shown in Fig. 2, determining the personal identity corresponding to the recognized face comprises the following steps.

In step S21, a preset personal information database is acquired, the preset personal information database comprises correspondence relationships between faces and personal identities.

In step S22, the recognized face is compared with the faces in the preset personal information database to find a face in the preset personal information database which matches the recognized face.

In step S23, a personal identity corresponding to the face in the preset personal information database which matches the recognized face is acquired.

The user may set the preset personal information database in advance. For example, the preset personal information database is generated by acquiring face photos of family members and setting an identification or a family relationship corresponding to a face photo of every family member. Additionally or alternatively, schoolmates, friends, colleagues and the like may be added to the preset personal information database.

### II. Determine the personal identity corresponding to the face by virtue of contact information of the user

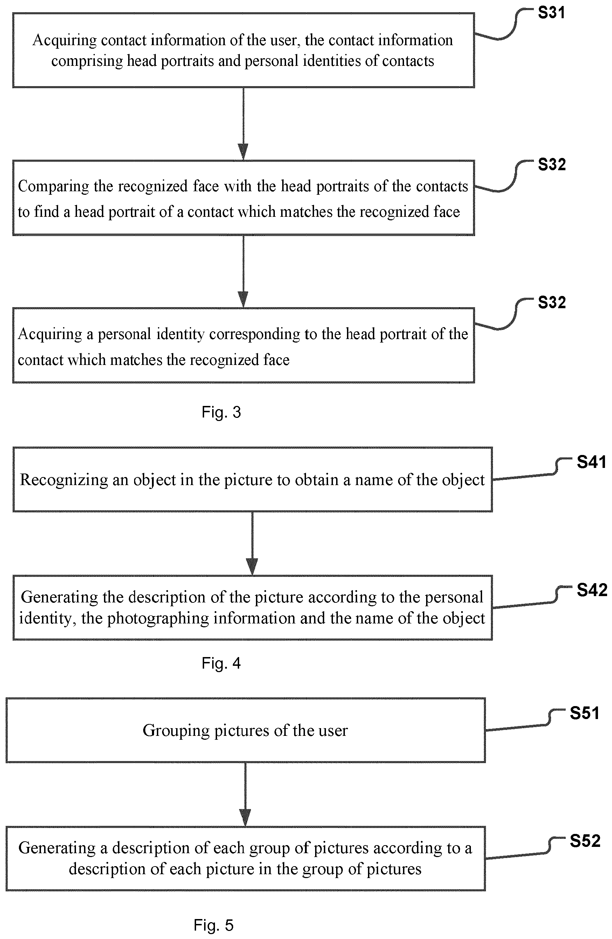

Fig. 3 is a flow chart illustrating a picture processing method according to another exemplary embodiment. As shown in Fig. 3, determining the personal identity corresponding to the recognized face comprises the following steps.

In step S31, contact information of the user is acquired. The contact information comprises head portraits and personal identities of contacts.

In step S32, the recognized face is compared with the head portraits of the contacts to find a head portrait of a contact which matches the recognized face.

In step S33, a personal identity corresponding to the head portrait of the contact which matches the recognized face is acquired.

Thus, the personal identity corresponding to the face in the picture is determined by virtue of the head portraits of the contacts in a contact list.

In this embodiment, these two implementations may also be combined together, which is to say, the personal identity corresponding to the face in the picture is determined according to both the preset personal information database and the contact information in the contact list.

In this embodiment, by determining the personal identity corresponding to the face according to either of the above-described implementations or a combination thereof, the personal identity in the picture may be recognized precisely, so that a more accurate description of the picture can be generated subsequently according to the personal identity, the intelligence for automatic description of a picture is improved to be closer to human's ability to describe the picture, and the user can quickly get an accurate knowledge of every picture, and user experience is improved.

In another embodiment, to generate the description of the picture more accurately, other information of the picture (e.g., photographing information, information of an object other than faces in the picture, etc.) may be further acquired.

Fig. 4 is a flow chart illustrating a picture processing method according to another exemplary embodiment. As shown in Fig. 4, generating the description of the picture according to the personal identity and the photographing information further comprises the following steps.

In step S41, an object in the picture is recognized to obtain a name of the object.

Algorithms such as R-CNN and fast-CNN may be utilized to recognize object(s) contained in a picture. For example, possible candidate areas are first framed in the picture, and then CNN classification is performed for objects in the framed areas.

In step S42, the description of the picture is generated according to the personal identity, the photographing information and the name of the object.

For example, if the photographing time of the picture is October 1, 2015, the photographing location of the picture is Tiananmen Square, the faces in the picture are those of the user's parents and the recognized objects in the picture include flowers, a national flag and the like, then the generated description may be "see a flag-raising ceremony with parents at Tiananmen Square on October 1, 2015".

Furthermore, in addition to the personal identity, the photographing information and the name of the object, other information may also be taken into consideration in automatically describing the picture (e.g., weather information for the day on which the picture is taken, a news event occurring at the photographing time and location, etc.)

In this embodiment, the description is generated according to various types of related information of the picture, so that the description becomes more accurate, the intelligence for automatic description of a picture is improved to be closer to human's ability to describe the picture, the user can quickly get an accurate knowledge of every picture, and user experience is improved.

In another embodiment, pictures may be grouped, and an overall description may be generated for each group of pictures. Fig. 5 is a flow chart illustrating a picture processing method according to this exemplary embodiment. As shown in Fig. 5, the method further comprises the following steps.

In step S51, pictures of the user are grouped.

In step S52, a description of each group of pictures is generated according to a description of each picture in the group of pictures.

For example, some representative text fragments may be extracted from descriptions of individual pictures in each group by employing the Extractive algorithm and then integrated to generate the description of each group of pictures.

The pictures may be grouped according to photographing scenes. Grouping the pictures of the user comprises:
grouping the pictures according to at least one of the following factors: photographing times and photographing locations of the pictures and faces in the pictures.

For example, the user may group the photos taken on October 1, 2015 into one group, the photos taken at Tiananmen Square into one group, all the photos containing the faces of the user's parents into one group, the photos taken at Tiananmen Square on October 1, 2015 into one group, the photos containing the faces of the user's parents and taken on October 1, 2015 into one group, the photos containing the faces of the user's parents and taken at Tiananmen Square into one group, or the photos containing the faces of the user's parents and taken at Tiananmen Square on October 1, 2015 into one group.

Photos taken at the same scene can be accurately divided by grouping these photos based on information such as photographing information of the photos and faces in the photos, thereby facilitating subsequent accurate automatic description of each group of photos.

The user may browse the pictures by group, and the grouping and the description of each group of pictures are displayed upon reception of a browsing command issued by the user. In addition, the pictures in each group and the descriptions of the pictures may be displayed in a slideshow manner.

In this embodiment, the pictures are described by group and the grouped pictures and the description thereof are displayed, so that the user can quickly get an accurate knowledge of each group of pictures and user experience is improved.

In the following, embodiments of the apparatus of the present invention, which may be applied to implement the embodiments of the method of the present invention, are described.

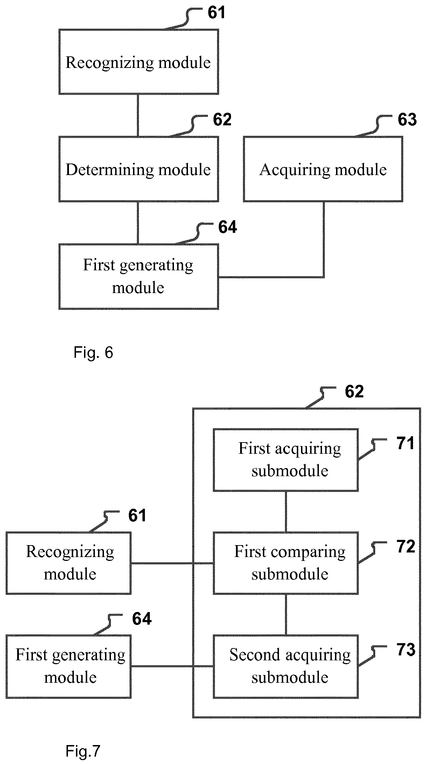

Fig. 6 is a block diagram illustrating a picture processing apparatus according to an exemplary embodiment. The apparatus may be implemented as part of or whole of an electronic device through software, hardware or combinations of the both. As shown in Fig. 6, the picture processing apparatus comprises:
a recognizing module 61 configured to recognize a face in a picture of a user.

For example, geometrical feature-based methods, template-based methods and model-based methods may be employed by the recognizing module 61. Among them, the template-based methods may be classified into correlation matching-based methods, Eigenfaces methods, linear discriminant analysis methods, singular value decomposition methods, neural network methods, dynamic link matching methods and the like. And the model-based methods include those based on Hidden Markov Model, Active Shape Model and Active Appearance Model, etc.

A determining module 62 is configured to determine a personal identity corresponding to the face recognized by the recognizing module 61, the personal identity comprising at least one of an identification of a person corresponding to the face and a relationship between the person corresponding to the face and the user.

The identification of the person may be an identification for identifying the identity of this person, such as a name, a network account, a nickname, a code name of the person, etc. The relationship between the person and the user may involve a family relationship, a kinship, a schoolmate relationship, a colleague relationship, a friend relationship, etc.

An acquiring module 63 is configured to acquire photographing information of the picture, the photographing information comprising at least one of a photographing time and a photographing location of the picture.

The photographing information of the picture may be extracted from an exchangeable image file (abbreviated as exif) of the picture. The exif contains metadata that is dedicatedly specified for a photo of a digital camera and that comprises at least the following types of information on recording of the digital photo:
a photographing time, photographing equipment (e.g., main body of the equipment, lens, flashlight, etc.), photographing parameters (e.g., shutter speed, aperture F-number, ISO speed, focal length, metering mode, etc.), image processing parameters (e.g., sharpness, contrast, saturation, white balance, etc.), image description and copyright information, a photographing location (e.g., GPS positioning data, etc.), a thumbnail, etc.

A first generating module 64 is configured to generate a description of the picture according to the personal identity determined by the determining module 62 and the photographing information acquired by the acquiring module 63.

For instance, the face(s) in the picture is (are) recognized by the recognizing module 61, the determining module 62 determines that the faces in the picture are those of the user's parents, and the photographing information of the picture acquired by the acquiring module 63 comprises a photographing time of October 1, 2015 and a photographing location of Tiananmen. Then the first generating module 64 may use an abstract generation technology among natural language processing technologies to generate a description of the picture as follows: "with parents at Tiananmen on October 1, 2015", "have a trip in Beijing with parents on October 1, 2015", etc.

In this embodiment, the face(s) in the picture is (are) recognized by the recognizing module 61, and the first generating module 64 generates the description of the picture according to the personal identity(identities) corresponding to the face(s) determined by the determining module 62 as well as the photographing information of the picture acquired by the acquiring module 63, so that a description of the picture is generated more accurately, the intelligence for automatic description of a picture is improved to be closer to human's ability to describe the picture, the user can quickly get an accurate knowledge of every picture, and user experience is improved.

In another embodiment, the personal identity corresponding to the recognized face may be determined according to one of the following implementations.

### I. Determine the personal identity corresponding to the face by virtue of a preset personal information database

Fig. 7 is a block diagram illustrating the determining module according to an exemplary embodiment. As shown in Fig. 7, the determining module 62 comprises:
a first acquiring submodule 71 configured to acquire a preset personal information database, the preset personal information database comprising correspondence relationships between faces and personal identities;
a first comparing submodule 72 configured to compare the face recognized by the recognizing module 61 with the faces in the preset personal information database acquired by the first acquiring submodule 71 to find a face in the preset personal information database which matches the recognized face;
a second acquiring submodule 73 configured to acquire a personal identity corresponding to the face in the preset personal information database which matches the recognized face.

The user may set the preset personal information database in advance. For example, the preset personal information database is generated by acquiring face photos of family members and setting an identification or a family relationship corresponding to a face photo of every family member. Additionally or alternatively, schoolmates, friends, colleagues and the like may also be added to the preset personal information database.

### II. Determine the personal identity corresponding to the face by virtue of contact information of the user

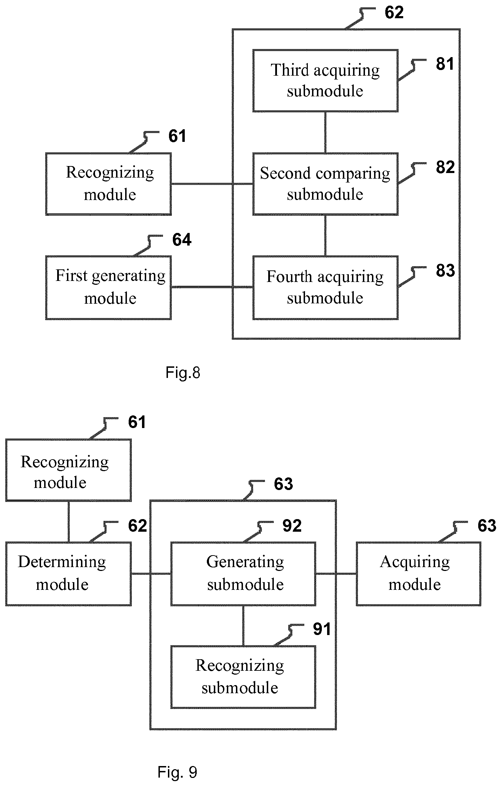

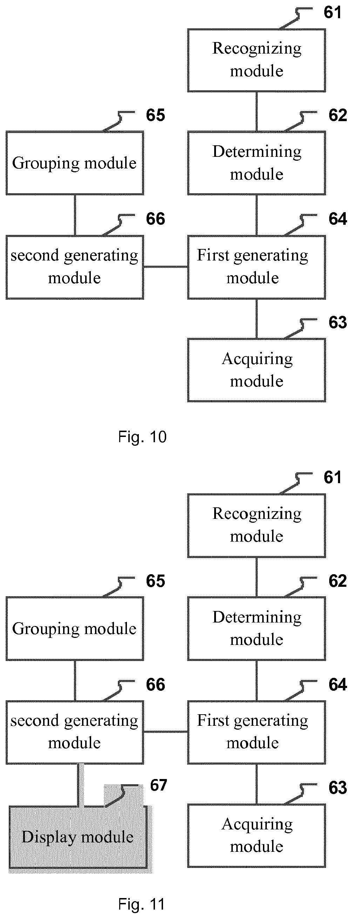

Fig. 8 is a block diagram illustrating the determining module according to another exemplary embodiment. As shown in Fig. 10, the determining module 62 comprises:
a third acquiring submodule 81 configured to acquire contact information of the user, the contact information comprising head portraits and personal identities of contacts;
a second comparing submodule 82 configured to compare the face recognized by the recognizing module 61 with the head portraits of the contacts to find a head portrait of a contact that matches the recognized face;
a fourth acquiring submodule 83 configured to acquire a personal identity corresponding to the head portrait of the contact that matches the recognized face.

Thus, the personal identity corresponding to the face in the picture may be determined by virtue of the head portraits of the contacts in a contact list.

In this embodiment, these two implementations may also be combined together, which is to say, the personal identity corresponding to the face in the picture is determined according to both the preset personal information database and the contact information in the contact list.

In this embodiment, by determining the personal identity corresponding to the face according to either of the above-described implementations or a combination thereof, the personal identity in the picture may be recognized precisely, so that a more accurate description of the picture can be generated subsequently according to the personal identity, the intelligence for automatic description of a picture is improved to be closer to human's ability to describe the picture, and the user can quickly get an accurate knowledge of every picture, and user experience is improved.

In another embodiment, to generate the description of the picture more accurately, other information of the picture (e.g. photographing information, information of an object other than faces in the picture, etc.) may be further acquired.

Fig. 9 is a block diagram illustrating the first generating module according to an exemplary embodiment. As shown in Fig. 9, optionally, the first generating module 64 comprises:
a recognizing submodule 91 configured to recognize an object in the picture to obtain a name of the object. Algorithms such as R-CNN and fast-CNN may be utilized to recognize object(s) contained in a picture. For example, possible candidate areas are first framed in the picture, and then CNN classification is performed for objects in these framed areas.

A generating submodule 92 is configured to generate the description of the picture according to the personal identity determined by the determining module 62, the photographing information acquired by the acquiring module 63 and the name of the object recognized by the recognizing submodule 91.

For example, if the photographing time of the picture is October 1, 2015, the photographing location of the picture is Tiananmen Square, the faces in the picture are those of the user's parents and the recognized objects in the picture include flowers, a national flag and the like, then the generated description may be "see a flag-raising ceremony with parents at Tiananmen Square on October 1, 2015".

Furthermore, in addition to the personal identity, the photographing information and the name of the object, other information may also be taken into consideration in automatically describing the picture (e.g. weather information for the day on which the picture is taken, a news event occurring at the photographing time and location, etc.)

In this embodiment, the description is generated according to various types of related information of the picture, so that the description becomes more accurate, the intelligence for automatic description of a picture is improved to be closer to human's ability to describe the picture, and the user can quickly get an accurate knowledge of every picture, and user experience is improved.

In another embodiment, pictures may also be grouped, and an overall description may be generated for each group of pictures. Fig. 10 is a block diagram illustrating a picture processing apparatus according to another exemplary embodiment. As shown in Fig. 10, the apparatus further comprises:
a grouping module 65 configured to group pictures of the user;
a second generating module 66 configured to generate a description of each group of pictures according to a description of each picture in the group of pictures generated by the first generating module 63.

In another embodiment, the grouping module 65 is configured to group the pictures according to at least one of the following factors: photographing times and photographing locations of the pictures acquired by the acquiring module 63 and faces in the pictures recognized by the recognizing module 61.

For example, the user may group the photos taken on October 1, 2015 into one group, the photos taken at Tiananmen Square into one group, all the photos containing the faces of the user's parents into one group, the photos taken at Tiananmen Square on October 1, 2015 into one group, the photos containing the faces of the user's parents and taken on October 1, 2015 into one group, the photos containing the faces of the user's parents and taken at Tiananmen Square into one group, or the photos containing the faces of the user's parents and taken at Tiananmen Square on October 1, 2015 into one group.

Photos taken at the same scene can be accurately divided by grouping these photos based on information such as photographing information of the photos and faces in the photos, thereby facilitating subsequent accurate automatic description of each group of photos.

Fig. 11 is a block diagram illustrating a picture processing apparatus according to another exemplary embodiment. As shown in Fig. 11, the apparatus further comprises:
a display module 67 configured to display the grouping and the description of each group of pictures generated by the second generating module upon reception of a browsing command issued by the user.

Optionally, the display module 67 is configured to display the pictures in each group and the descriptions of the pictures generated by the first generating module in a slideshow manner.

The user may browse the pictures by group, and the grouping and the description of each group of pictures are displayed upon reception of a browsing command issued by the user. In addition, the pictures in each group and the descriptions of the pictures may be displayed in a slideshow manner.

In this embodiment, the pictures are described by group and the grouped pictures and the description thereof are displayed, so that the user can quickly get an accurate knowledge of each group of pictures and user experience is improved.

The present invention also provides a picture processing apparatus, comprising:
a processor;
a memory configured to store instructions executable by the processor,
wherein the processor is configured to:
   recognize a face in a picture of a user;
   determine a personal identity corresponding to the recognized face, the personal identity comprising at least one of an identification of a person corresponding to the face and a relationship between the person corresponding to the face and the user;
   acquire photographing information of the picture, the photographing information comprising at least one of a photographing time and a photographing location of the picture; and
   generate a description of the picture according to the personal identity and the photographing information.

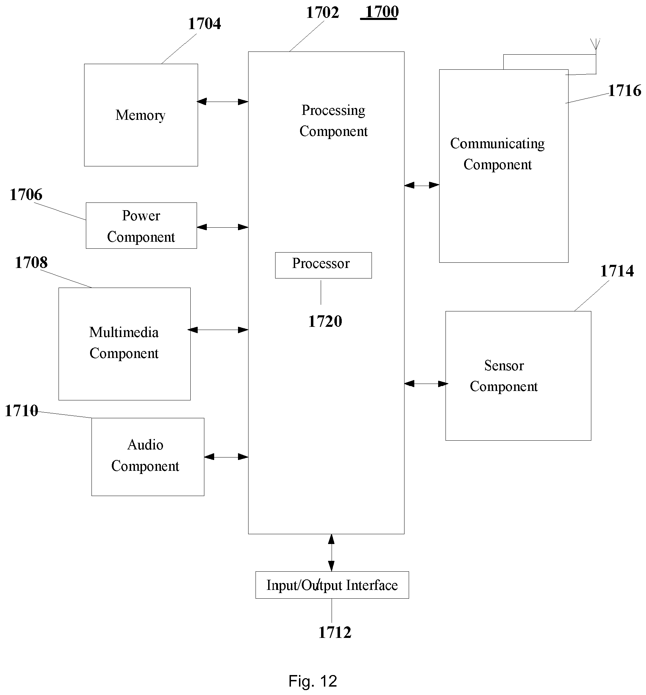

Fig. 12 is a block diagram of an apparatus 1700 for processing picture according to an exemplary embodiment, which is applicable to a terminal device. For example, the apparatus 1700 may be a camera, a sound recording device, a mobile phone, a computer, a digital broadcast terminal, a messaging device, a gaming console, a tablet, a medical device, exercise equipment, a personal digital assistant or the like.

Referring to Fig. 12, the apparatus 1700 may include one or more of the following components: a processing component 1702, a memory 1704, a power component 1706, a multimedia component 1708, an audio component 1710, an input/output (I/O) interface 1712, a sensor component 1714, and a communication component 1716.

The processing component 1702 typically controls overall operations of the apparatus 1700, such as the operations associated with display, telephone calls, data communications, camera operations, and recording operations. The processing component 1702 may include one or more processors 1720 to execute instructions to perform all or part of the steps in the above described methods. Moreover, the processing component 1702 may include one or more modules which facilitate the interaction between the processing component 1702 and other components. For instance, the processing component 1702 may include a multimedia module to facilitate the interaction between the multimedia component 1708 and the processing component 1702.

The memory 1704 is configured to store various types of data to support the operation of the apparatus 1700. Examples of such data include instructions for any applications or methods operated on the apparatus 1700, contact data, phonebook data, messages, pictures, video, etc. The memory 1704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1706 provides power to various components of the apparatus 1700. The power component 1706 may include a power management system, one or more power sources, and any other components associated with the generation, management, and distribution of power in the apparatus 1700.

The multimedia component 1708 includes a screen providing an output interface between the apparatus 1700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 1708 includes a front camera and/or a rear camera. The front camera and the rear camera may receive an external multimedia datum while the apparatus 1700 is in an operation mode, such as a photographing mode or a video mode. Each of the front camera and the rear camera may be a fixed optical lens system or have focus and optical zoom capability.

The audio component 1710 is configured to output and/or input audio signals. For example, the audio component 1710 includes a microphone ("MIC") configured to receive an external audio signal when the apparatus 1700 is in an operation mode, such as a call mode, a recording mode, and a voice recognition mode. The received audio signal may be further stored in the memory 1704 or transmitted via the communication component 1716. In some embodiments, the audio component 1710 further includes a speaker to output audio signals.

The I/O interface 1712 provides an interface between the processing component 1702 and peripheral interface modules, such as a keyboard, a click wheel, buttons, and the like. The buttons may include, but are not limited to, a home button, a volume button, a starting button, and a locking button.

The sensor component 1714 includes one or more sensors to provide status assessments of various aspects of the apparatus 1700. For instance, the sensor component 1714 may detect an open/closed status of the apparatus 1700, relative positioning of components, e.g., the display and the keypad, of the apparatus 1700, a change in position of the apparatus 1700 or a component of the apparatus 1700, a presence or absence of user contact with the apparatus 1700, an orientation or an acceleration/deceleration of the apparatus 1700, and a change in temperature of the apparatus 1700. The sensor component 1714 may include a proximity sensor configured to detect the presence of nearby objects without any physical contact. The sensor component 1714 may also include a light sensor, such as a CMOS or CCD image sensor, for use in imaging applications. In some embodiments, the sensor component 1714 may also include an accelerometer sensor, a gyroscope sensor, a magnetic sensor, a pressure sensor, or a temperature sensor.

The communication component 1716 is configured to facilitate communication, wired or wirelessly, between the apparatus 1700 and other devices. The apparatus 1700 can access a wireless network based on a communication standard, such as WiFi, 2G, or 3G, or a combination thereof. In one exemplary embodiment, the communication component 1716 receives a broadcast signal or broadcast associated information from an external broadcast management system via a broadcast channel. In one exemplary embodiment, the communication component 1716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1704, executable by the processor 1720 in the apparatus 1700, for performing the above-described methods. For example, the non-transitory computer-readable storage medium may be a ROM, a RAM, a CD-ROM, a magnetic tape, a floppy disc, an optical data storage device, and the like.

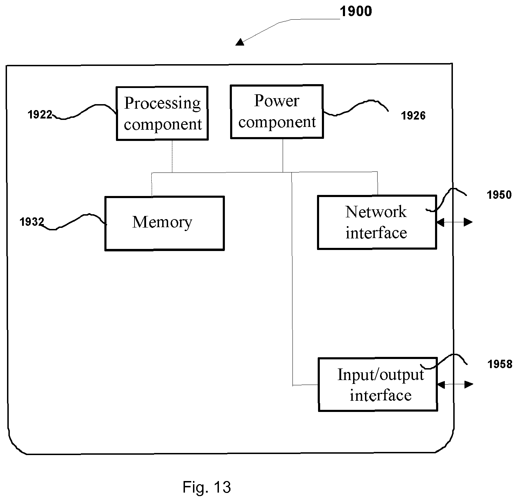

Fig. 13 is a block diagram illustrating an apparatus for processing a picture according to an exemplary embodiment. For example, the apparatus 1900 may be provided as a server. The apparatus 1900 comprises a processing component 1922, which further comprises one or more processors, and a memory resource represented by a memory 1932, which is configured to store instructions (e.g. application programs) that are executable by the processing component 1922. The application programs stored in the memory 1932 may comprise one or more modules, each of which corresponds to a group of instructions. In addition, the processing component 1922 is configured to execute the instructions, in order to implement the methods described above.

The apparatus 1900 may also comprise a power component 1926 configured to perform power management for the apparatus 1900, a wired or wireless network interface 1950 configured to connect the apparatus 1900 to a network, and an input/output (I/O) interface 1958. The apparatus 1900 may operate based on an operating system (e.g., Windows Server^{™}, Mac OS X^{™}, Unix^{™}, Linux^{™}, FreeBSD^{™} or the like) stored in the memory 1932.

## Claims

1. A picture processing method performed by a terminal **characterized by** comprising:
recognizing a face in a picture of a user using a machine face recognition method;
determining a personal identity data corresponding to the thus recognized face, the personal identity data comprising at least one of an identification of a person corresponding to the face and a relationship between the person corresponding to the face and the user;
acquiring photograph information of the picture, the photograph information comprising at least one of a photograph time and a photograph location of the picture;
generating description data of the picture according to the personal identity data, the photographing information and weather information for a day on which the picture is taken;
grouping pictures of the user, wherein grouping pictures of the user comprises grouping the pictures according to at least one of the following factors: photograph times of the pictures, photograph locations of the pictures and faces in the pictures; and
generating description data of each group of pictures according to description data of each picture in the group of pictures;
wherein determining the personal identity data corresponding to the recognized face comprises:
determining the personal identity data corresponding to the recognized face in the picture by virtue of head portraits of contacts in a contact list of the terminal.

2. The method of claim 1, **characterized in that** determining the personal identity data corresponding to the recognized face comprises:
acquiring a preset personal information database, the preset personal information database comprising correspondence relationships between faces and personal identity data;
comparing the recognized face with the faces in the preset personal information database to find a face in the preset personal information database which matches the recognized face; and
acquiring personal identity data corresponding to the face in the preset personal information database which matches the recognized face.

3. The method of claim 1, **characterized in that** determining the personal identity data corresponding to the recognized face comprises:
acquiring contact information of the user, the contact information comprising head portraits and personal identities of contacts;
comparing the recognized face with the head portraits of the contacts to find a head portrait of a contact which matches the recognized face; and
acquiring personal identity data corresponding to the head portrait of the contact which matches the recognized face.

4. The method of claim 1, **characterized in that** generating the description of the picture according to the personal identity and the photographing information comprises:
recognizing an object in the picture to obtain a name of the object using an object recognition technique; and
generating the description of the picture according to the personal identity data , the photographing information and the name of the object.

5. The method of claim 1, **characterized by** further comprising: displaying the grouping and the description of each group of pictures upon reception of a browsing command issued by the user.

6. The method of claim 5, **characterized in that** displaying the grouping and the description of each group of pictures comprises:
displaying the pictures in each group and the descriptions of the pictures in a slideshow manner.

7. A picture processing apparatus implemented as part of or whole of an electronic device, **characterized by** comprising:
a recognizing module configured to recognize a face in a picture of a user;
a determining module configured to determine personal identity data corresponding to the face recognized by the recognizing module, the personal identity data comprising at least one of an identification of a person corresponding to the face and a relationship between the person corresponding to the face and the user;
an acquiring module configured to acquire photograph information of the picture, the photograph information comprising at least one of a photograph time and a photograph location of the picture;
a first generating module configured to generate description data of the picture according to the personal identity determined by the determining module, the photographing information acquired by the acquiring module and weather information for a day on which the picture is taken;
a grouping module configured to group pictures of the user, the grouping module being configured to group the pictures of the user according to at least one of the following factors: photographing times and photographing locations of the pictures acquired by the acquiring module and faces in the pictures recognized by the recognizing module; and
a second generating module configured to generate description data of each group of pictures according to description data of each picture in the group of pictures generated by the first generating module;
wherein when performs the step of determining the personal identity data corresponding to the recognized face, the determining module is configured to:
determining the personal identity data corresponding to the recognized face in the picture by virtue of head portraits of contacts in a contact list of the electronic device.

8. The apparatus of claim 7, **characterized in that** the determining module comprises:
a first acquiring submodule configured to acquire a preset personal information database, the preset personal information database comprising correspondence relationships between faces and personal identity data;
a first comparing submodule configured to compare the face recognized by the recognizing module with the faces in the preset personal information database acquired by the first acquiring submodule to find a face in the preset personal information database which matches the recognized face; and
a second acquiring submodule configured to acquire personal identity data corresponding to the face in the preset personal information database which matches the recognized face.

9. The apparatus of claim 7, **characterized in that** the determining module comprises:
a third acquiring submodule configured to acquire contact information of the user, the contact information comprising head portraits and personal identity data of contacts;
a second comparing submodule configured to compare the face recognized by the recognizing module with the head portraits of the contacts to find a head portrait of a contact which matches the recognized face; and
a fourth acquiring submodule configured to acquire personal identity data corresponding to the head portrait of the contact which matches the recognized face.

10. The apparatus of claim 7, **characterized in that** the first generating module comprises:
a recognizing submodule configured to recognize an object in the picture to obtain a name of the object; and
a generating submodule configured to generate description data of the picture according to the personal identity determined by the determining module, the photographing information acquired by the acquiring module and the name of the object recognized by the recognizing submodule.

11. The apparatus of claim 7, **characterized by** further comprising:
a display module configured to, upon reception of a browsing command issued by the user, display the grouping and the description of each group of pictures generated by the second generating module.

12. The apparatus of claim 11, **characterized in that** the display module is configured to display the pictures in each group and the descriptions of the pictures generated by the first generating module in a slideshow manner.

13. A computer readable storage medium with a computer program stored thereon, wherein, the program is configured to implement steps of the method of any one of claims 1 to 6 when executed by a processor.

## Patentansprüche

1. Bildverarbeitungsverfahren, das von einem Endgerät durchgeführt wird, **dadurch gekennzeichnet, dass** es Folgendes aufweist:
Erkennen eines Gesichts in einem Bild eines Benutzers unter Verwendung eines maschinellen Gesichtserkennungsverfahrens;
Bestimmen von Personenidentitätsdaten, die dem so erkannten Gesicht entsprechen, wobei die Personenidentitätsdaten wenigstens eine von einer Identifikation einer dem Gesicht entsprechenden Person und einer Beziehung zwischen der dem Gesicht entsprechenden Person und dem Benutzer aufweisen;
Erfassen von Fotografieinformationen des Bilds, wobei die Fotografieinformationen wenigstens eines von einer Fotografiezeit und einem Fotografieort des Bilds aufweisen;
Erzeugen von Beschreibungsdaten des Bilds gemäß den Personenidentitätsdaten, den Fotografierinformationen und Wetterinformationen für einen Tag, an dem das Bild aufgenommen wird;
Gruppieren von Bildern des Benutzers, wobei das Gruppieren der Bilder des Benutzers das Gruppieren der Bilder gemäß wenigstens einem der folgenden Faktoren aufweist:
Fotografiezeiten der Bilder, Fotografieorte der Bilder und Gesichter in den Bildern; und
Erzeugen von Beschreibungsdaten von jeder Bildergruppe gemäß Beschreibungsdaten jedes Bilds in der Bildergruppe;
wobei das Bestimmen der dem erkannten Gesicht entsprechenden Personenidentitätsdaten Folgendes aufweist:
Bestimmen der dem erkannten Gesicht in dem Bild entsprechenden Personenidentitätsdaten aufgrund von Kopfporträts von Kontakten in einer Kontaktliste des Endgeräts.

2. Verfahren nach Anspruch 1, **dadurch gekennzeichnet, dass** das Bestimmen der dem erkannten Gesicht entsprechenden Personenidentitätsdaten Folgendes aufweist:
Erfassen einer voreingestellten Personeninformationsdatenbank, wobei die voreingestellte Personeninformationsdatenbank Entsprechungsbeziehungen zwischen Gesichtern und Personenidentitätsdaten aufweist;
Vergleichen des erkannten Gesichts mit den Gesichtern in der voreingestellten Personeninformationsdatenbank, um in der voreingestellten Personeninformationsdatenbank ein Gesicht zu finden, das mit dem erkannten Gesicht übereinstimmt; und
Erfassen von Personenidentitätsdaten, die dem Gesicht in der voreingestellten Personeninformationsdatenbank entsprechen, das mit dem erkannten Gesicht übereinstimmt.

3. Verfahren nach Anspruch 1, **dadurch gekennzeichnet, dass** das Bestimmen der dem erkannten Gesicht entsprechenden Personenidentitätsdaten Folgendes aufweist:
Erfassen von Kontaktinformationen des Benutzers, wobei die Kontaktinformationen Kopfporträts und Personenidentitäten von Kontakten aufweisen;
Vergleichen des erkannten Gesichts mit den Kopfporträts der Kontakte, um ein Kopfporträt eines Kontakts zu finden, das mit dem erkannten Gesicht übereinstimmt; und
Erfassen von Personenidentitätsdaten, die dem Kopfporträt des Kontakts entsprechen, das mit dem erkannten Gesicht übereinstimmt.

4. Verfahren nach Anspruch 1, **dadurch gekennzeichnet, dass** das Erzeugen der Beschreibung des Bilds gemäß der Personenidentität und der Fotografierinformationen Folgendes aufweist:
Erkennen eines Objekts in dem Bild, um einen Namen des Objekts unter Verwendung einer Objekterkennungsmethode zu erhalten; und
Erzeugen der Beschreibung des Bilds gemäß den Personenidentitätsdaten, den Fotografierinformationen und dem Namen des Objekts.

5. Verfahren nach Anspruch 1, **dadurch gekennzeichnet**, das es ferner Folgendes aufweist:
Anzeigen der Gruppierung und der Beschreibung jeder Bildergruppe bei Empfang eines vom Benutzer ausgegebenen Browsing-Befehls.

6. Verfahren nach Anspruch 5, **dadurch gekennzeichnet, dass** das Anzeigen der Gruppierung und der Beschreibung jeder Bildergruppe Folgendes aufweist:
Anzeigen der Bilder in jeder Gruppe und der Beschreibungen der Bilder in der Art einer Diashow.

7. Bildverarbeitungsvorrichtung, die als Teil oder Ganzes einer elektronischen Vorrichtung implementiert ist, **dadurch gekennzeichnet, dass** sie Folgendes aufweist:
ein Erkennungsmodul, das zum Erkennen eines Gesichts in einem Bild eines Benutzers konfiguriert ist;
ein Bestimmungsmodul, das zum Bestimmen von Personenidentitätsdaten, die dem von dem Erkennungsmodul erkannten Gesicht entsprechen, konfiguriert ist, wobei die Personenidentitätsdaten wenigstens eine von einer Identifikation einer dem Gesicht entsprechenden Person und einer Beziehung zwischen der dem Gesicht entsprechenden Person und dem Benutzer aufweisen;
ein Erfassungsmodul, das zum Erfassen von Fotografieinformationen des Bilds konfiguriert ist, wobei die Fotografieinformationen wenigstens eines von einer Fotografiezeit und einem Fotografieort des Bilds aufweisen;
ein erstes Erzeugungsmodul, das zum Erzeugen von Beschreibungsdaten des Bilds gemäß den vom Bestimmungsmodul bestimmten Personenidentitätsdaten, den vom Erfassungsmodul erfassten Fotografierinformationen und Wetterinformationen für einen Tag, an dem das Bild aufgenommen wird, konfiguriert ist;
ein Gruppierungsmodul, das zum Gruppieren von Bildern des Benutzers konfiguriert ist, wobei das Gruppierungsmodul zum Gruppieren der Bilder des Benutzers das Gruppieren der Bilder gemäß wenigstens einem der folgenden Faktoren aufweist:
Fotografierzeiten und Fotografierorte der durch das Erfassungsmodul erfassten Bilder und durch das Erkennungsmodul erkannte Gesichter in den Bildern; und
ein zweites Erzeugungsmodul, das zum Erzeugen von Beschreibungsdaten von jeder Bildergruppe gemäß durch das erste Erzeugungsmodul erzeugten Beschreibungsdaten jedes Bilds in der Bildergruppe konfiguriert ist;
wobei das Bestimmungsmodul bei Durchführung des Schritts des Bestimmens der dem erkannten Gesicht entsprechenden Personenidentitätsdaten konfiguriert ist zum:
Bestimmen der dem erkannten Gesicht in dem Bild entsprechenden Personenidentitätsdaten aufgrund von Kopfporträts von Kontakten in einer Kontaktliste der elektronischen Vorrichtung.

8. Vorrichtung nach Anspruch 7, **dadurch gekennzeichnet, dass** das Bestimmungsmodul Folgendes aufweist:
ein erstes Erfassungsuntermodule, das zum Erfassen einer voreingestellten Personeninformationsdatenbank konfiguriert ist, wobei die voreingestellte Personeninformationsdatenbank Entsprechungsbeziehungen zwischen Gesichtern und Personenidentitätsdaten aufweist;
ein erstes Vergleichsuntermodul, das zum Vergleichen des durch das Erkennungsmodul erkannten Gesichts mit den Gesichtern in der durch das erste Erfassungsmodul erfassten voreingestellten Personeninformationsdatenbank, um in der voreingestellten Personeninformationsdatenbank ein Gesicht zu finden, das mit dem erkannten Gesicht übereinstimmt, konfiguriert ist; und
ein zweites Erfassungsuntermodul, das zum Erfassen von Personenidentitätsdaten, die dem Gesicht in der voreingestellten Personeninformationsdatenbank entsprechen, das mit dem erkannten Gesicht übereinstimmt, konfiguriert ist.

9. Vorrichtung nach Anspruch 7, **dadurch gekennzeichnet, dass** das Bestimmungsmodul Folgendes aufweist:
ein drittes Erfassungsuntermodul, das zum Erfassen von Kontaktinformationen des Benutzers konfiguriert ist, wobei die Kontaktinformationen Kopfporträts und Personenidentitätsdaten von Kontakten aufweisen;
ein zweites Vergleichsuntermodul, das zum Vergleichen des durch das Erkennungsmodul erkannten Gesichts mit den Kopfporträts der Kontakte, um ein Kopfporträt eines Kontakts zu finden, das mit dem erkannten Gesicht übereinstimmt, konfiguriert ist; und
ein viertes Erfassungsuntermodul, das zum Erfassen von Personenidentitätsdaten, die dem Kopfporträt des Kontakts entsprechen, das mit dem erkannten Gesicht übereinstimmt, konfiguriert ist.

10. Vorrichtung nach Anspruch 7, **dadurch gekennzeichnet, dass** das erste Erzeugungsmodul Folgendes aufweist:
ein Erkennungsuntermodul, das zum Erkennen eines Objekts in dem Bild, um einen Namen des Objekts zu erhalten, konfiguriert ist; und
ein Erzeugungsuntermodul, das zum Erzeugen von Beschreibungsdaten des Bilds gemäß den durch das Bestimmungsmodul bestimmten Personenidentitätsdaten, den durch das Erfassungsmodul erfassten Fotografierinformationen und dem durch das Erkennungsuntermodul erkannten Namen des Objekts.

11. Vorrichtung nach Anspruch 7, **dadurch gekennzeichnet, dass** sie ferner Folgendes aufweist:
ein Anzeigemodul, das zum Anzeigen der Gruppierung und der durch das zweite Erzeugungsmodul erzeugten Beschreibung von jeder Bildergruppe bei Empfang eines vom Benutzer ausgegebenen Browsing-Befehls konfiguriert ist.

12. Vorrichtung nach Anspruch 11, **dadurch gekennzeichnet, dass** das Anzeigemodul zum Anzeigen der Bilder in jeder Gruppe und der von dem ersten Erzeugungsmodul erzeugten Beschreibungen der Bilder in der Art einer Diashow konfiguriert ist.

13. Computerlesbares Speichermedium mit einem darauf gespeicherten Computerprogramm, wobei das Programm zum Implementieren von Schritten des Verfahrens nach einem der Ansprüche 1 bis 6, wenn durch einen Prozessor ausgeführt, konfiguriert ist.

## Revendications

1. Procédé de traitement d'image réalisé par un terminal, **caractérisé en ce qu'**il comprend :
la reconnaissance d'un visage dans une photo d'un utilisateur à l'aide d'un procédé de reconnaissance faciale automatique ;
la détermination de données d'identité personnelle correspondant au visage ainsi reconnu, les données d'identité personnelle comprenant au moins une identification d'une personne correspondant au visage et une relation entre la personne correspondant au visage et l'utilisateur ;
l'acquisition d'informations photographiques de l'image, les informations photographiques comprenant au moins une heure de photographie et un emplacement de photographie de l'image ;
la génération de données descriptives de l'image en fonction des données d'identité personnelle, des informations photographiques et d'informations météorologiques du jour auquel l'image est prise ;
le groupement d'images de l'utilisateur, dans lequel le groupement d'images de l'utilisateur comprend le groupement des images en fonction d'au moins un des facteurs suivants : heures de photographie des images, emplacement de photographie des images et visages dans les images ; et
la génération de données descriptives de chaque groupe d'images en fonction de données descriptives de chaque image dans le groupe d'images ;
dans lequel la détermination des données d'identité personnelle correspondant au visage reconnu comprend :
la détermination des données d'identité personnelle correspondant au visage reconnu dans l'image en vertu de portraits de tête de contacts dans une liste de contacts du terminal.

2. Procédé selon la revendication 1, **caractérisé en ce que** la détermination des données d'identité personnelle correspondant au visage reconnu comprend :
l'acquisition d'une base de données d'informations personnelles prédéfinies, la base de données d'informations personnelles prédéfinies comprenant des relations de correspondance entre des visages et des données d'identité personnelle ;
la comparaison du visage reconnu aux visages dans la base de données d'informations personnelles prédéfinies pour trouver dans la base de données d'informations personnelles prédéfinies un visage qui correspond au visage reconnu ; et
l'acquisition de données d'identité personnelle correspondant au visage dans la base de données d'informations personnelles prédéfinies qui correspond au visage reconnu.

3. Procédé selon la revendication 1, **caractérisé en ce que** la détermination des données d'identité personnelle correspondant au visage reconnu comprend :
l'acquisition d'informations de contact de l'utilisateur, les informations de contact comprenant des portraits de tête et des identités personnelles de contacts ;
la comparaison du visage reconnu aux portraits de tête des contacts pour trouver un portrait de tête d'un contact qui correspond au visage reconnu ; et
l'acquisition de données d'identité personnelle correspondant au portrait de tête du contact qui correspond au visage reconnu.

4. Procédé selon la revendication 1, **caractérisé en ce que** la génération de la description de l'image en fonction de l'identité personnelle et des informations photographiques comprend :
la reconnaissance d'un objet dans l'image pour obtenir un nom de l'objet à l'aide d'une technique de reconnaissance d'objet ; et
la génération de la description de l'image en fonction des données d'identité personnelle, des informations photographiques et du nom de l'objet.

5. Procédé selon la revendication 1, **caractérisé en ce qu'**il comprend en outre :
l'affichage du groupement et de la description de chaque groupe d'images à la réception d'une commande de navigation émise par l'utilisateur.

6. Procédé selon la revendication 5, **caractérisé en ce que** l'affichage du groupement et de la description de chaque groupe d'images, comprend :
l'affichage des images dans chaque groupe et des descriptions des images sous forme de diaporama.

7. Appareil de traitement d'image mis en oeuvre en tant que partie ou totalité d'un dispositif électronique, **caractérisé en ce qu'**il comprend :
un module de reconnaissance configuré pour reconnaître un visage dans une image d'un utilisateur ;
un module de détermination configuré pour déterminer des données d'identité personnelle correspondant au visage reconnu par le module de reconnaissance, les données d'identité personnelle comprenant au moins une identification d'une personne correspondant au visage et une relation entre la personne correspondant au visage et l'utilisateur ;
un module d'acquisition configuré pour acquérir des informations photographiques de l'image, les informations photographiques comprenant au moins une heure de photographie et un emplacement de photographie de l'image ;
un premier module de génération configuré pour générer des données descriptives de l'image en fonction de l'identité personnelle déterminée par le module de détermination, les informations photographiques acquises par le module d'acquisition et des informations météorologiques du jour auquel la photo est prise ;
un module de groupement configuré pour grouper des images de l'utilisateur, le module de groupement étant configuré pour grouper les images de l'utilisateur en fonction d'au moins un des facteurs suivants : des heures de photographie et des emplacements de photographie des images acquises par le module d'acquisition et des visages dans les images reconnues par le module de reconnaissance ; et
un deuxième module de génération configuré pour générer des données descriptives de chaque groupe d'images en fonction de données descriptives de chaque image dans le groupe d'images générées par le premier module de génération.

8. Appareil selon la revendication 7, **caractérisé en ce que** le module de détermination comprend :
un premier sous-module d'acquisition configuré pour acquérir une base de données d'informations personnelles prédéfinies, la base de données d'informations personnelles prédéfinies comprenant des relations de correspondance entre des visages et des données d'identité personnelle ;
un premier sous-module de comparaison configuré pour comparer le visage reconnu par le module de reconnaissance aux visages dans la base de données d'informations personnelles prédéfinies acquise par le premier sous-module d'acquisition afin de trouver un visage dans la base de données d'informations personnelles prédéfinies qui correspond au visage reconnu ; et
un deuxième sous-module d'acquisition configuré pour acquérir des données d'identité personnelle correspondant au visage dans la base de données d'informations personnelles prédéfinies qui correspond au visage reconnu.

9. Appareil selon la revendication 7, **caractérisé en ce que** le module de détermination comprend :
un troisième sous-module d'acquisition configuré pour acquérir des informations de contact de l'utilisateur, les informations de contact comprenant des portraits de tête et des données d'identité personnelle de contacts ;
un deuxième sous-module de comparaison configuré pour comparer le visage reconnu par le module de reconnaissance aux portraits de tête des contacts afin de trouver un portrait de tête d'un contact qui correspond au visage reconnu ; et
un quatrième sous-module d'acquisition configuré pour acquérir des données d'identité personnelle correspondant au portrait de tête du contact qui correspond au visage reconnu.

10. Appareil selon la revendication 7, **caractérisé en ce que** le premier module de génération comprend :
un sous-module de reconnaissance configuré pour reconnaître un objet dans l'image afin d'obtenir un nom de l'objet ; et
un sous-module de génération configuré pour générer des données descriptives de l'image en fonction de l'identité personnelle déterminée par le module de détermination, des informations photographiques acquises par le module d'acquisition et du nom de l'objet reconnu par le sous-module de reconnaissance.

11. Appareil selon la revendication 7, **caractérisé en ce qu'**il comprend en outre :
un module d'affichage configuré pour, à la réception d'une commande de navigation émise par l'utilisateur, afficher le groupement et la description de chaque groupe d'images généré par le deuxième module de génération.

12. Appareil selon la revendication 11, **caractérisé en ce que** le module d'affichage est configuré pour afficher les images dans chaque groupe et les descriptions des images générées par le premier module de génération sous forme de diaporama.

13. Support de stockage lisible par ordinateur sur lequel est stocké un programme d'ordinateur, dans lequel le programme est configuré pour mettre en oeuvre les étapes du procédé selon l'une quelconque des revendications 1 à 6 lorsqu'il est exécuté par un processeur.
